# EUROPEAN PATENT APPLICATION

(11) **EP 4 704 226 A1**
(43) Date of publication of application: **04.03.2026**
(21) Application number: 25194042.5
(22) Date of filing: 05.08.2025
(51) Int. Cl.: H01M 50/103, H01M 50/209, H01M 50/342, H01M 50/383, H01M 50/503, H01M 50/507, H01M 50/588

(54) **SECONDARY BATTERY ASSEMBLY AND BATTERY MODULE**

(30) Priority: 27.08.2024 KR 20240115259
(71) Applicant: SAMSUNG SDI CO., LTD., Yongin-si, Gyeonggi-do 17084 (KR)
(72) Inventor: LEE, Hyeok, Suwon-si, Gyeonggi-do 16678 (KR)
(74) Representative: Gulde & Partner

(57) **Abstract**

A secondary battery assembly (100) and a battery module (10) that comprises a plurality of secondary battery assemblies (100) suppress thermal propagation resulting from high-temperature gases and flammable materials released from some battery cells. The secondary battery assembly (100) includes a battery cell (101). The battery cell (101) includes a case (102), a terminal (130) protruding from the case (102), and a cell vent (250, 250R) installed in the case (102) to be rupturable, and a plurality of cell covers (300) corresponding one-to-one with the plurality of battery cells (101). Each of the plurality of cell covers (300) includes a cover body (301), in which a cover through-hole (330) aligned with the cell vent (250, 250R) is formed and which is supported by the case (102), an insulation piece (380, 380R) supported by the cover body (301) to close the cover through-hole (330).

## Description

### FIELD

The present disclosure relates to a secondary battery assembly and a battery module.

### BACKGROUND

In general, with the recent proliferation of electronic devices using batteries, such as mobile phones, notebook computers, and electric vehicles, the demand for secondary batteries having high energy density and high capacity has rapidly increased. Accordingly, research and development to improve the performance of lithium secondary batteries are being actively conducted.

### SUMMARY

According to some embodiments, a secondary battery assembly and a battery module are provided to suppress thermal propagation in which adjacent battery cells ignite due to high-temperature gases and flammable materials released from some battery cells.

However, aspects and features of the disclosure are not limited to those described below, and other aspects and features not mentioned will be clearly understood by those skilled in the art through the following detailed description.

According to an aspect of the disclosure, a secondary battery assembly includes a battery cell including a case, a terminal protruding from the case, and a cell vent installed in the case to be rupturable, and a cell cover including a cover body, in which a cover through-hole aligned with the cell vent is formed and which is supported by the case. The cell cover also includes an insulation piece supported by the cover body to close the cover through-hole.

Hence, the insulation piece may facilitate blocking or delaying this rapid thermal propagation.

The insulation piece may include an insulating material.

The cell cover may be fixed to the case. An advantage of this embodiment may be that gases cannot readily remove the cell cover.

According to another aspect of the disclosure, a battery module includes a housing and a plurality of secondary battery assembly according to the one aspect of the disclosure. In particular, according to the other aspect of the disclosure, a battery module includes a housing and a plurality of battery cells disposed inside the housing. Each of the plurality of battery cells includes a case, a terminal protruding from the case, and a cell vent installed in the case to be rupturable. A plurality of cell covers correspond one-to-one with the plurality of battery cells. Each of the plurality of cell covers includes a cover body, in which a cover through-hole aligned with the cell vent is formed and which is supported by the case. An insulation piece is supported by the cover body and closes the cover through-hole, and a cell bus bar electrically connects the terminal of one battery cell among the plurality of battery cells to the terminal of another battery cell.

Hence, the insulation piece may facilitate blocking or delaying this rapid thermal propagation regarding neighboring battery assemblies or batterie cells.

The cover body may include a terminal exposure portion that exposes the terminal. An advantage of this embodiment may be that the terminal is easily accessible.

The terminal may be provided as a pair in the battery cell, and the pair of terminals may be disposed on a cell vent surface in which the cell vent is installed. An advantage of this embodiment may be that the battery cell can be connected completely easily.

The cover body may include a plate portion. The plate portion may come into contact with and may be supported on an outer periphery of the cell vent surface. A skirt portion that may be bent at an edge of the plate portion, may extend in a direction away from the cell bus bar. An advantage of this embodiment may be that the cover body can be can be fixed without much volume required.

The skirt portion may be provided as a pair spaced apart from each other. An advantage of this embodiment may be that the cover body can be fixed without much weight required.

A pair of adjacent battery cells among the plurality of battery cells may be spaced apart by a gap. The gap may be greater than or equal to twice a thickness of the skirt portion. An advantage of this embodiment may be that neighboring batter cells can be provided with the cover body attached.

The cover body may further include an insulation piece support portion. The cover through-hole may be formed in the insulation piece support portion. The insulation piece may be attached to the insulation piece support port. An advantage of this embodiment may be that the insulation piece support portion can be provided in a compact manner.

One surface of the insulation piece support portion facing the cell vent surface may be spaced apart from one surface of the plate portion facing the cell vent surface with a step difference. An advantage of this embodiment may be that installation space for the insulation piece is provided while also keeping the insulation piece in its designated place.

The cell cover may be fixed to the battery cell by the cell bus bar. An advantage of this embodiment may be that no additional element for fixing the cell cover is required, which reduces volume and weight.

The cover body may include an insulation piece support portion in which the cover through-hole is formed. The insulation piece may be attached to insulation piece support portion. When the cell cover is fixed to the battery cell by the cell bus bar, the insulation piece support portion may press the insulation piece in a direction that brings the insulation piece into close contact with the case. An advantage of this embodiment may be that contamination from the environment is avoided or at least hindered.

The cell bus bar may include a first terminal coupling portion coupled to the terminal of the one battery cell. The cell bus bar may include a second terminal coupling portion coupled to the terminal of the another battery cell. The cell bus bar may include a cell cover pressing portion to connect the first terminal coupling portion and the second terminal coupling portion. The cell cover pressing portion may press the cell cover in a direction that brings the cell cover into close contact with the case. An advantage of this embodiment may be that the cell cover is further fixed.

The cell bus bar may include a metal plate. The cell cover pressing portion may be bent to protrude further toward the case than the first terminal coupling portion and the second terminal coupling portion. An advantage of this embodiment may be that terminal coupling portions are easily accessible without protruding from the cell in an undesired manner, thereby reducing the volume required for the battery module.

The cover body may further include a guide protrusion to guide a mounting position of the cell bus bar The cover body may further include a guide through-hole through which the guide protrusion passes. The guide through-hole may be formed in the cell bus bar. An advantage of this embodiment may be that the cover body can be easily positions and kept in position in a compact manner.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view of an exemplary battery module according to some embodiments;
FIG. 2 is an enlarged perspective view of portion A of FIG. 1;
FIG. 3 is an enlarged plan view of portion B of FIG. 1;
FIG. 4 is a perspective view of an exemplary secondary battery assembly according to some embodiments;
FIG. 5 is an exploded perspective view of the secondary battery assembly of FIG. 4;
FIG. 6 is a perspective view of a cell cover of FIG. 4 as viewed from below;
FIG. 7 is an exploded perspective view of the cell cover of FIG. 6;
FIG. 8 is a cross-sectional view of a battery cell of FIG. 4;
FIG. 9 is a cross-sectional view taken along line C-C of FIG. 1; and
FIG. 10 is a cross-sectional view corresponding to FIG. 9 and illustrating the release of gases and flammable materials from one battery cell included in the battery module of FIG. 1, and.

### DETAILED DESCRIPTION

Herein, embodiments will be described with reference to the accompanying drawings. When describing embodiments with reference to the drawings, the same or corresponding elements are denoted by the same reference numerals. As those skilled in the art would realize, the described embodiments may be modified in various different ways, all without departing from the disclosure or scope of the claims. The drawings and description are to be regarded as illustrative in nature and not restrictive.

Secondary batteries are widely used for driving or energy storage not only in small devices, such as portable electronic devices, but also in medium and large devices, such as electric vehicles and energy storage systems (ESS). To improve the output and/or capacity of the secondary battery, especially in medium and large devices, one battery module may be configured as a plurality of battery cells electrically connected to each other.

During the charging and discharging of the battery module, one or more battery cells may release flammable materials containing high-temperature gases to the outside of the battery cells due to an abnormal reaction inside the one or more battery cells or an impact from outside the battery cell. The high-temperature gases and the flammable materials released to the outside of the one or more battery cells may result in thermal propagation, consecutively igniting adjacent battery cells and causing a fire. The inventors have recognized features and aspects that facilitate blocking or delaying this rapid thermal propagation.

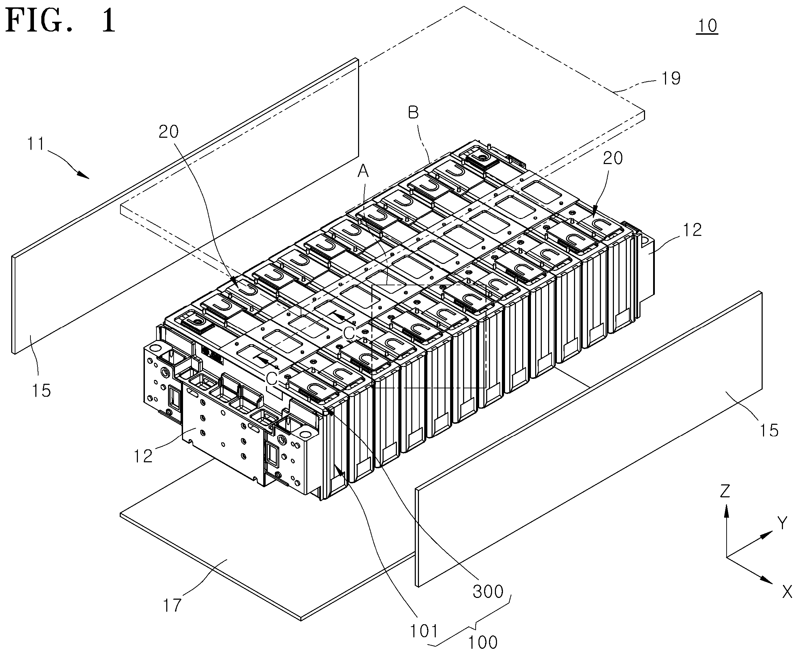

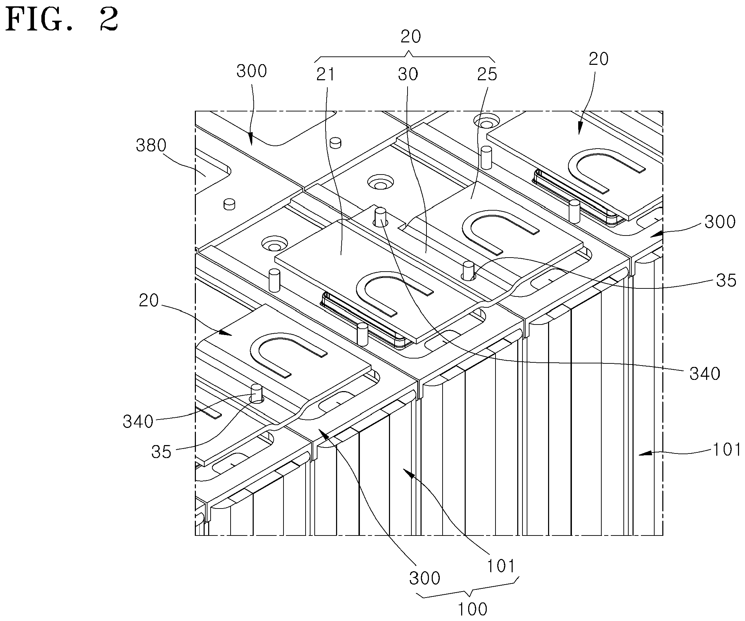

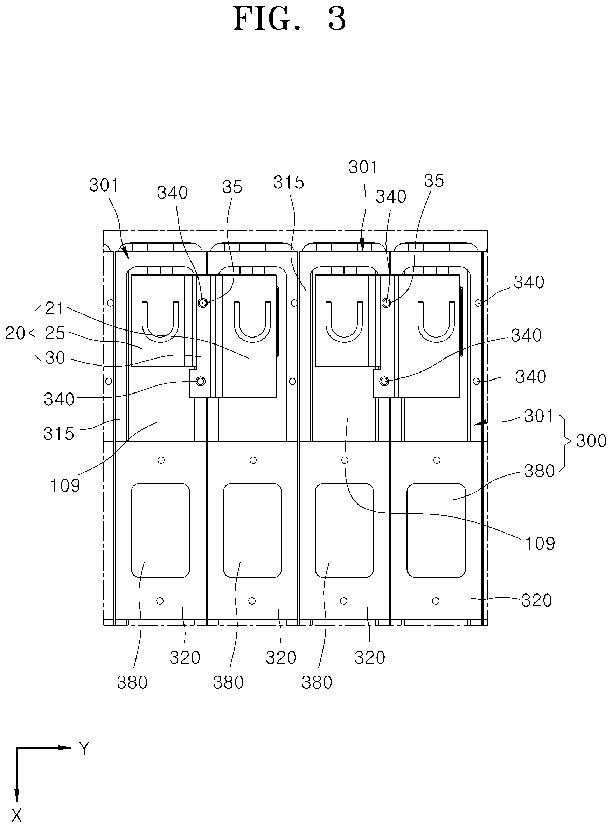

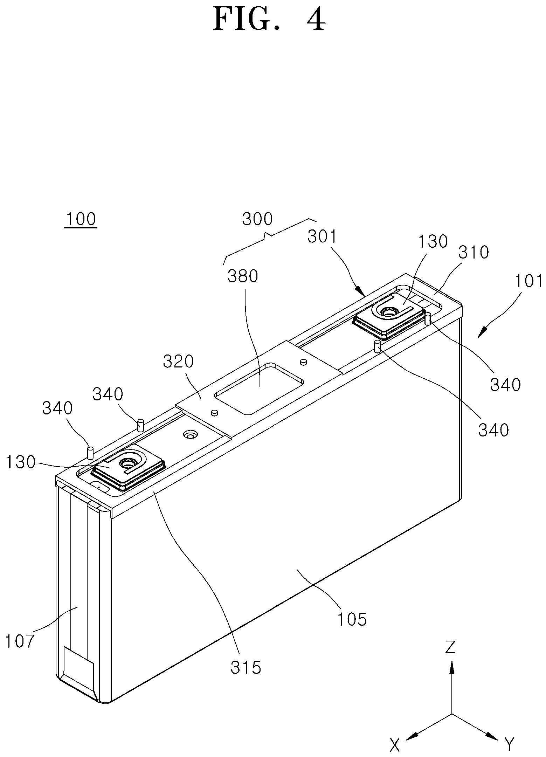

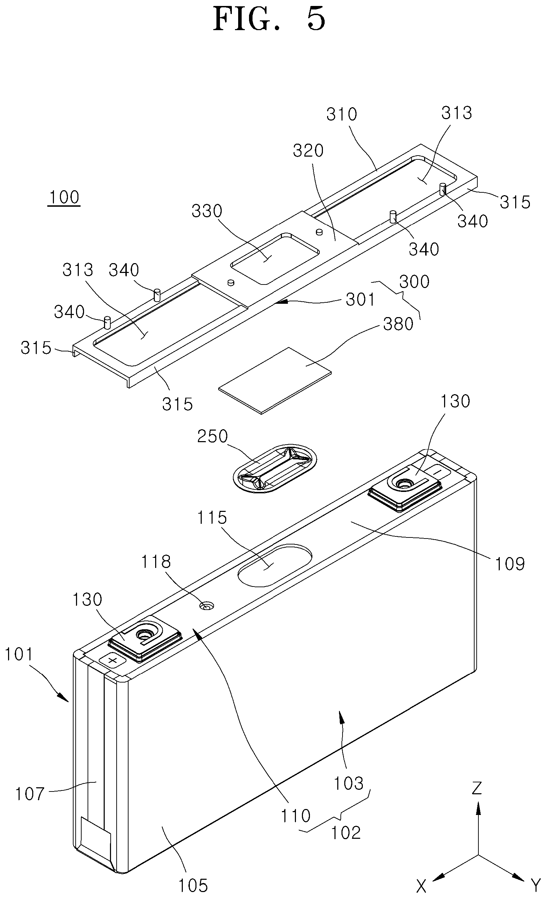

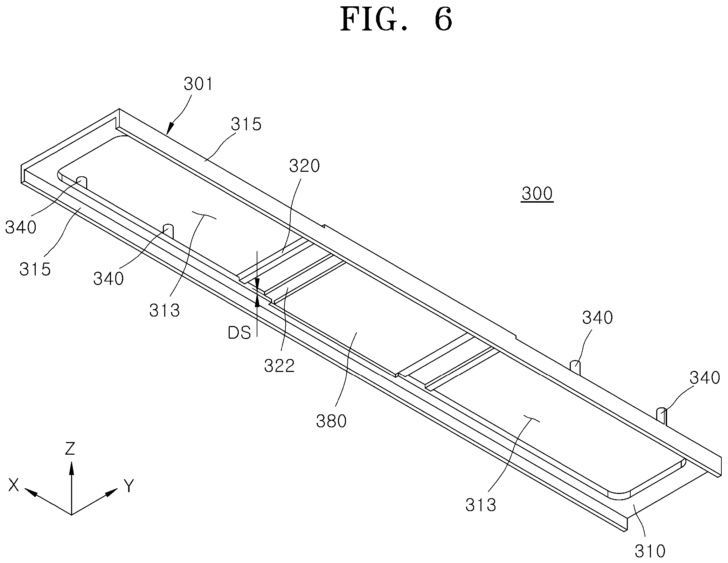

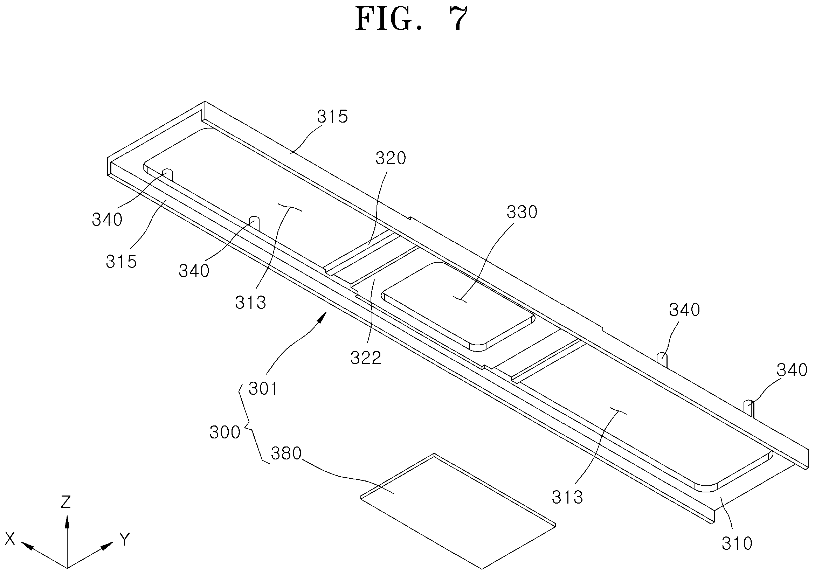

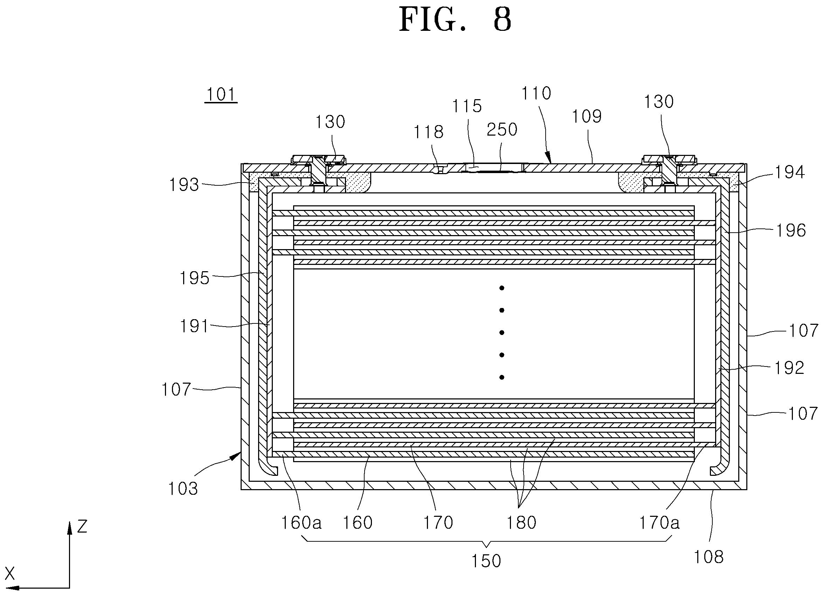

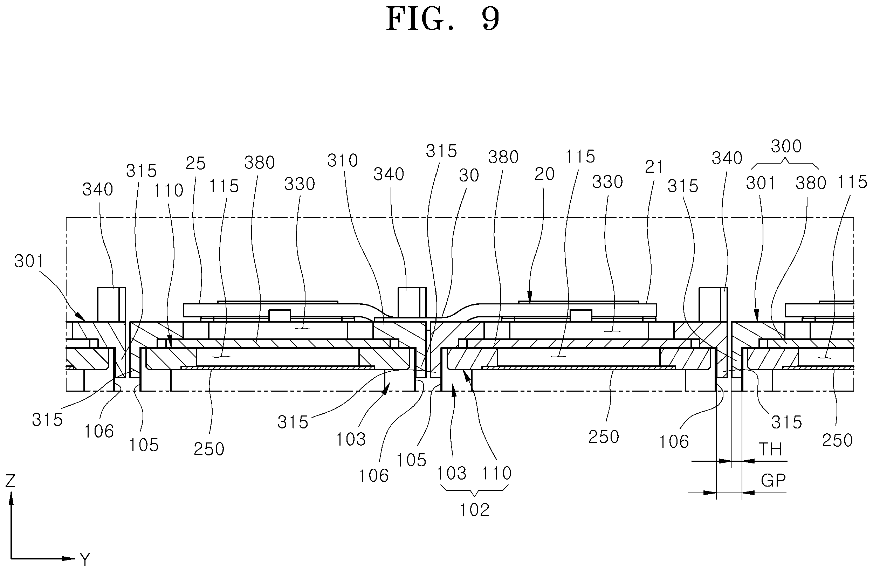

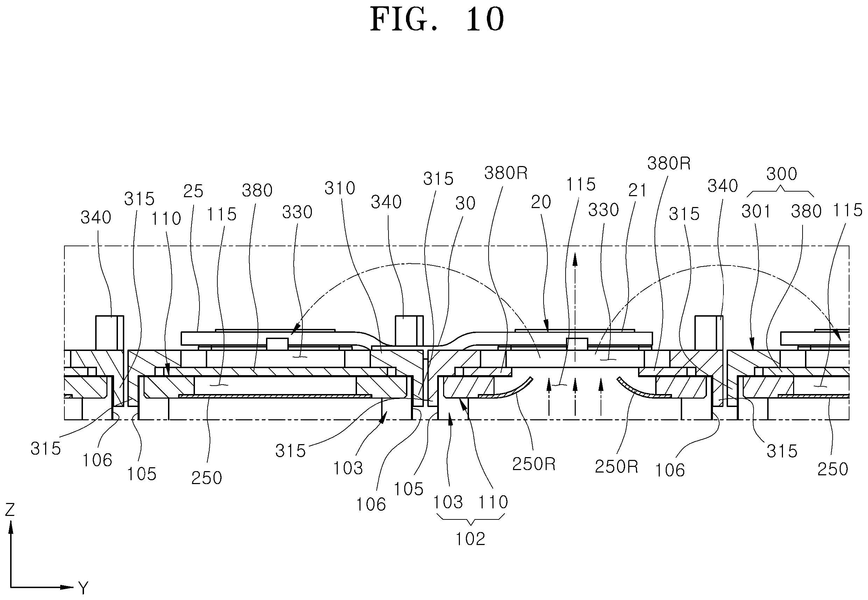

FIG. 1 is a perspective view of an exemplary battery module 10 according to some embodiments, FIG. 2 is an enlarged perspective view of portion A of FIG. 1, and FIG. 3 is an enlarged plan view of portion B of FIG. 1. FIG. 4 is a perspective view of an exemplary secondary battery assembly 100 according to some embodiments. FIG. 5 is an exploded perspective view of the secondary battery assembly 100 of FIG. 4, FIG. 6 is a perspective view of a cell cover 300 of FIG. 4 as viewed from below, and FIG. 7 is an exploded perspective view of the cell cover 300 of FIG. 6. FIG. 8 is a cross-sectional of a battery cell 101 of the exemplary battery module 10 of FIG. 4, FIG. 9 is a cross-sectional view taken along line C-C of FIG. 1, and FIG. 10 is a cross-sectional view corresponding to FIG. 9 and illustrating the release of gases and flammable material from one battery cell 101 included in the battery module 10 of FIG. 1.

A lithium-ion secondary battery having a prismatic shape is illustrated and described for explanatory purposes. However, the various embodiments and features are not limited thereto, and the secondary battery may be, for example, a lithium polymer battery, a cylindrical battery, or the like.

Referring to FIGS.1 to 7, a battery module 10 according to some embodiments includes a housing 11, a plurality of battery cells 101, a plurality of cell covers 300, and a plurality of cell bus bars 20. The plurality of cell covers 300 are provided in a number corresponding one-to-one to the number of the battery cells 101. The plurality of battery cells 101 may be arranged in a row in one direction, e.g., in a Y direction according to the exemplary embodiment of FIG. 1.

The housing 11 may include a pair of end plates 12, a pair of side plates 15, a bottom plate 17, and a cover 19. The pair of end plates 12 may be disposed to be spaced apart from each other, with the plurality of battery cells 101 interposed therebetween. One of the pair of end plates 12 may be disposed to cover a front surface 105 of the battery cell 101 located at the frontmost position among the plurality of battery cells 101.

The other one of the pair of end plates 12 may be disposed to cover a rear surface 106 (indicated in FIG. 9) of the battery cell 101, located at the rearmost position among the plurality of battery cells 101.

The pair of side plates 15 may be disposed to be spaced apart from each other in an X direction, according to the arrangement in FIG. 1, with the plurality of battery cells 101 interposed therebetween. The pair of side plates 15 may be disposed to face each other while respectively covering a pair of side surfaces 107 of each of the plurality of battery cells 101. Front and rear end portions of the pair of side plates 15 in the Y direction, i.e., opposite surfaces in the X direction, may be bonded to opposite end portions, in the X direction, of the pair of end plates 12 by methods such as welding, adhesive application, or the like.

The bottom plate 17 may be disposed below the plurality of battery cells 101 to face and cover a lower surface 108 of each of the plurality of battery cells 101. A front end portion and a rear end portion of the bottom plate 17, i.e., opposite end portions in the Y direction, may be coupled to the pair of end plates 12.

The cover 19 may be coupled to and supported by the pair of end plates 12 and the pair of side plates 15 so that the plurality of battery cells 101 are not exposed.

In FIGS. 1 to 10, positive (+) and negative (-) directions parallel to an X- axis are referred to as a first direction, positive (+) and negative (-) directions parallel to a Y-axis are referred to as a second direction, and positive (+) and negative (-) directions parallel to a Z-axis are referred to as a third direction. For example, the first direction may be a width direction of the battery module 10, the second direction may be a length direction of the battery module 10, and the third direction may be a height direction of the battery module 10.

Referring to FIGS. 4 and 8, a secondary battery assembly 100 of the battery module 10 may include a battery cell 101 and one cell cover 300 supported on the battery cell 101. The battery cell 101 may include an electrode assembly 150, a case 102, terminals 130, and a cell vent 250.

The electrode assembly 150 (FIG. 8) may include a positive electrode 160, a negative electrode 170, and a separator 180 disposed between the positive electrode 160 and the negative electrode 170.

Each of the positive electrode 160 and the negative electrode 170 may include a coated portion, which is a region in which a current collector formed of a thin metal foil is coated with the active material, and uncoated portions 160a and 170a that are regions to which a current collector is not coated with the active material.

The electrode assembly 150 may be wound in a jelly roll shape after the separator 180, which is an insulator, is interposed between the positive electrode 160 and the negative electrode 170. However, the electrode assembly 150 is not limited to this shape. For example, the electrode assembly 150 may have a stacked structure in which the positive electrode 160 and the negative electrode 170, each composed of a plurality of sheets, are alternately stacked with the separator 180 interposed therebetween.

The electrode assembly 150 may be formed as a single electrode assembly 150, or of a plurality of electrode assemblies 150.

The case 102 may form the overall appearance of the battery cell 101. The case 102 may have a hexahedral shape with six surfaces. For example, the case 102 may have a rectangular parallelepiped shape. The electrode assembly 150 may be accommodated inside the case 102.

The case 102 may include a case body 103 and a cap plate 110 that closes an open side of the case body 103. The case body 103 may include a conductive metal material such as aluminum, an aluminum alloy, or nickel-plated steel.

For example, the cap plate 110 may be formed to have the shape of a plate. The cap plate 110 may be disposed above the case body 103 to cover the open side of the case body 103. The cap plate 110 may be coupled to the case body 103 by various types of coupling methods such as welding, bolting, and fitting-coupling. The cap plate 110 may be made of a conductive material including at least one of aluminum and an aluminum alloy.

The terminal 130 may protrude from the case 102. For example, the terminal 130 may be installed to pass through the cap plate 110 and protrude to the outside of the cap plate 110. The terminal 130 protruding to the outside of the cap plate 110 may be formed in a pair. The pair of terminals 130 may be individually connected to the positive electrode 160 and the negative electrode 170 of the electrode assembly 150. Accordingly, the pair of terminals 130 may function as positive and negative terminals of the battery cell 101, respectively.

As an example, the terminals 130 may be electrically connected to a first current collector 191 (hereinafter, referred to as a positive electrode current collector) and a second current collector 192 (hereinafter, referred to as a negative electrode current collector) welded and bonded to a positive electrode uncoated portion 160a and a negative electrode uncoated portion 170a, respectively. For example, the pair of terminals 130 may be welded to the positive electrode current collector 191 and the negative electrode current collector 192, respectively. However, the present invention is not limited thereto, and the terminals 130 and the positive and negative electrode current collectors 191 and 192 may be formed by being integrally coupled to each other.

The cap plate 110 may further include an electrolyte inlet 118 in which a sealing cap (not shown) may be installed. The cap plate 110 may further include a vent hole 115.

The vent hole 115 may be a through hole passing through the cap plate 110 in the thickness direction. The vent hole 115 may provide a path for high-temperature gases and flammable materials formed inside the case 102 to be discharged from the battery cell 101 during thermal runaway of the battery cell 101.

The cell vent 250 may be opened and closed in conjunction with changes in an internal pressure of the case 102. The cell vent 250 may seal the case 102 by maintaining a closed state during normal operation of the battery cell 101. The cell vent 250 may be opened when the internal pressure of the case 102 rises above a set pressure level due to overcharging of the battery cell 101 or the occurrence of a fire. Accordingly, the high-temperature gases and flammable materials generated from the inside of the case 102 may be released to the outside of the case 102.

Insulating members 193 and 194 may be installed between the electrode assembly 150 and the cap plate 110. The insulating members 193 and 194 may include a first lower insulating member 193 and a second lower insulating member 194. The first lower insulating member 193 and the second lower insulating member 194 may be installed between the electrode assembly 150 and the cap plate 110.

One end of each of the separating members 195 and 196, which may be installed to face one side surface of the electrode assembly 150, may be installed between the insulating members 193 and 194 and the terminals 130, respectively.

The separating members 195 and 196 may include a first separating member 195 and a second separating member 196. The first and second separating members 195 and 196 may be installed between the first and second lower insulating members 193 and 194 and the pair of terminals 130, respectively, to face the electrode assembly 150.

The pair of terminals 130 welded to the first and second current collectors 191 and 192 may be coupled to the first and second lower insulating members 193 and 194 and the first and second separating members 195 and 196, respectively.

The case 102 may include the front surface 105 and the rear surface 106, which are spaced apart from each other in the second direction and perpendicular to the second direction, the pair of side surfaces 107, which are spaced apart from each other in the first direction and perpendicular to the first direction, and the lower surface 108 and an upper surface 109 that are spaced apart from each other in the third direction and perpendicular to the third direction.

In the illustrated battery cell 101, since the cell vent 250 is installed in the upper surface 109, the upper surface 109 may be referred to as a cell vent surface. The pair of terminals 130 may be disposed on the cell vent surface 109. The front surface 105, the rear surface 106, the pair of side surfaces 107, the lower surface 108, and the upper surface 109 of the case 102 may be referred to as the front surface 105, the rear surface 106, the pair of side surfaces 107, the lower surface 108, and the upper surface 109 of the battery cell 101. In addition, the front surface 105, the rear surface 106, the pair of side surfaces 107, the lower surface 108 of the case 102 may also be referred to as the front surface 105, the rear surface 106, the pair of side surfaces 107, the lower surface 108 of the case body 103.

Referring to FIGS. 1 to 7, 9, and 10, the cell cover 300 includes a cover body 301 and an insulation piece 380. A cover through-hole 330 aligned with the cell vent 250 is formed in the cover body 301. The cover body 301 is supported by the case 102. For example, the cover body 301 may be supported by the cell vent surface 109 of the case 102.

The cover body 301 may include a plate portion 310, a skirt portion 315, and a terminal exposure portion 313. The plate portion 310 may be in contact with and supported by an outer peripheral surface portion of the cell vent surface 109.

The skirt portion 315 may be bent at an edge of the plate portion 310 and extend in a direction away from the cell bus bars 20. In other words, the skirt portion 315 may extend in a direction toward the lower surface 108, i.e., in the negative (-) direction of the Z-axis.

The skirt portion 315 may be provided as a pair spaced apart from each other. For example, the pair of skirt portions 315 may extend in the first direction and may be disposed to be spaced apart from each other in the second direction. One of the pair of skirt portions 315 may overlap an upper end portion of the front surface 105 of the case 102, and the other one thereof may overlap an upper end portion of the rear surface 106 of the case 102.

As shown in FIG. 9, when the plurality of battery cells 101 of the battery module 10 are arranged between the pair of end plates 12, the pair of skirt portions 315 may be inserted between a pair of adjacent battery cells 101. For example, in the pair of adjacent battery cells 101, one skirt portion 315 of the cell cover 300 supported by one battery cell 101, and one skirt portion 315 of the cell cover 300 supported by the other battery cell 101 may be inserted between the rear surface 106 of one battery cell 101 and the front surface 105 of the other battery cell 101.

With this configuration, the pair of adjacent battery cells 101 may be spaced apart by a gap GP that is greater than or equal to twice a thickness TH of the skirt portion 315, as indicated in FIG. 9. Thus, even when the case 102 of one battery cell 101 among the plurality of battery cells 101 of the battery module 10 swells excessively during charging and discharging, sufficient clearance can be maintained to prevent the case 102 of the one battery cell 101 from coming into contact with the case 102 of the adjacent battery cell 101.

The terminal exposure portion 313 exposes the terminal 130. In other words, the pair of terminals 130 of the battery cell 101 may be exposed through the terminal exposure portions 313 and may protrude in the third direction. The terminal exposure portion 313 may be a through hole passing through the plate portion 310 in the thickness direction. The cover body 301 may have a pair of terminal exposure portions 313 so as to correspond to the number of the terminals 130.

The insulation piece 380 seals the cover through-hole 330 and is supported by the cover body 301. The insulation piece 380 may be made of an insulating material with excellent heat resistance. For example, the insulating material may include one of mica, aerogel, and ceramic. The insulation piece 380 may have a property of withstanding temperatures greater than or equal to for example 800 °C, 900 °C, 1000 °C, 1100 °C, 1200 °C or 1300 °C for more than for example 5 seconds, 7 seconds, 9 seconds, 10 seconds, 12 second, 14 seconds or 16 seconds without deformation. This duration may be sufficient for implementing countermeasures regarding overheating or fire.

The cover body 301 may further include an insulation piece support portion 320. The cover through-hole 330 may be formed in the insulation piece support portion 320. The insulation piece support portion 320 may be provided at a central portion of the cover body 301 in a length direction, that is, at the central portion of the cover body 301 in the first direction. The insulation piece 380 may be attached to the insulation piece support portion 320.

The cover through-hole 330 and the vent hole 115 may be aligned in a straight line in the third direction. Accordingly, the insulation piece 380 that closes the cover through-hole, and the vent hole 115 may also be aligned in a straight line in the third direction. A planar area of the insulation piece 380 may be larger than a planar area of the vent hole 115.

Thus, when the cell vent 250 ruptures and high-temperature gases and flammable materials are released to the outside of the case 102, the direct exposure of the high-temperature gases and flammable materials to the insulation piece support portion 320 or the plate portion 310, which could cause damage to the cover body 301, may be suppressed.

One surface of the insulation piece support portion 320 facing the cell vent surface 109 is spaced apart from one surface of the plate portion 310 facing the cell vent surface 109 with a step difference, so that the cell cover 300 does not come into contact with the cell vent surface 109 when placed on the battery cell 101. For example, a lower surface 322 of the insulation piece support portion 320 may be spaced apart from a lower surface of the plate portion 310 by a certain distance DS.

The spaced distance DS may be equal to or slightly less than a thickness of the insulation piece 380. The insulation piece 380 may be attached to the lower surface 322 of the insulation piece support portion 320. For example, the insulation piece 380 may be adhered and fixed to the insulation piece support portion 320 through double-sided adhesive tape (not shown). Alternatively, when the cover body 301 is pressed downward toward the cell vent surface 109 while the insulation piece 380 is placed on the cell vent surface 109, the insulation piece 380 may be tightly fixed to the insulation piece support portion 320.

The cell bus bar 20 electrically connects one terminal 130 of one battery cell 101 of the plurality of battery cells 101 included in the battery module 10 to one terminal 130 of another battery cell 101. A plurality of cell bus bars 20 may be provided.

The cell cover 300 may be fixed to the battery cell 101 by the cell bus bar 20. When the cell cover 300 is fixed to the battery cell 101 by the cell bus bar 20 while placed on the battery cell 101, the insulation piece support portion 320 may press the insulation piece 380 in a direction that brings the insulation piece 380 into close contact with the case 102, for example, in a downward direction.

Each cell bus bar 20 may include a first terminal coupling portion 21, a second terminal coupling portion 25, and a cell cover pressing portion 30.

The first terminal coupling portion 21 may be bonded to the terminal 130 belonging to one of the plurality of battery cells 101, for example, by welding. The second terminal coupling portion 25 may be bonded to the terminal 130 belonging to another one of the plurality of battery cells 101, for example, by welding.

The cell cover pressing portion 30 may connect the first terminal coupling portion 21 and the second terminal coupling portion 25 and press the cell cover 300 in a direction that brings the cell cover 300 into close contact with the case 102. For example, the cell cover pressing portion 30 may press the cell cover 300 in a downward direction that brings the cell cover 300 into close contact with the cell vent surface 109 of the case 102.

The cell bus bar 20 may include a metal plate. For example, the cell bus bar 20 may be manufactured by pressing a metal plate through pressing. The cell cover pressing portion 30 may be bent to protrude further toward the case 102 than the first terminal coupling portion 21 and the second terminal coupling portion 25. For example, the cell cover pressing portion 30 may be bent to protrude further downward than the first terminal coupling portion 21 and the second terminal coupling portion 25.

The cell cover 300 may be adhered and fixed to the case 102 instead of being fixed to the case 102 of the battery cell 101 by the cell bus bar 20. For example, by attaching a double-sided adhesive tape (not shown) to an outer periphery of the cell vent surface 109, placing the cell cover 300 on the cell vent surface 109, and pressing the cell cover 300 downward toward the cell vent surface 109, the cell cover 300 may be adhered and fixed to the case 102 through the double-sided adhesive tape.

The cover body 301 may further include a guide protrusion 340. The guide protrusion 340 guides a mounting position of the cell bus bars 20. For example, the guide protrusion 340 may protrude upward in the third direction from the plate portion 310. A plurality of guide protrusions 340 may be provided and positioned spaced apart from each other.

A guide through-hole 35 through which the guide protrusion 340 passes may be formed in the cell bus bar 20. A plurality of guide through-holes 35 may be provided in a one-to-one correspondence with the guide protrusions 340. The guide through-holes 35 may be formed in the cell cover pressing portion 30.

When the cell bus bar 20 is placed on the battery cell 101 such that the guide protrusions 340 pass through the guide through-holes 35, the cell bus bar 20 may be positioned vertically aligned with the battery cell 101.

In this state, by welding and connecting the first terminal coupling portion 21 with the terminal 130 positioned thereunder, and the second terminal coupling portion 25 with the terminal 130 positioned thereunder, one terminal 130 of one battery cell 101 and one terminal 130 of another battery cell 101 may be electrically connected.

The cover body 301 may include a synthetic resin. For example, the cover body 301 may be an injection-molded product formed by injecting molten synthetic resin into a mold (not shown), followed by curing.

In an exemplary embodiment, the insulation piece 380 may be bonded to the cover body 301 by insert molding. In other words, the insulation piece 380 may be inserted into the mold for forming the cover body 301, and then molten synthetic resin may be injected into the mold and cured inside the mold. Through this process, the cell cover 300 with the insulation piece 380 bonded to the cover body 301 may be molded. The cell cover 300 molded in this manner may be ejected from the mold.

Referring to FIGS. 9 and 10, when a cell vent 250R of a specific battery cell 101 included in the battery module 10 ruptures or opens due to thermal runaway of the specific battery cell 101, high-temperature gases and flammable materials may be forcefully released to the outside of the case 102, which may also cause damage to an insulation piece 380R aligned with the cell vent 250R.

Thus, as shown by one-dot chain line arrows in FIG. 10, the high-temperature gases and the flammable materials may be released upward through the cell cover 300, and some of the gases and the flammable materials may fall toward the adjacent cell cover 300 due to gravity. In FIG. 10, the label "250R" indicates the ruptured or opened cell vent, and the label '380R' indicates the ruptured insulation piece.

Since the temperature and pressure of the gases and flammable materials falling toward the adjacent cell cover 300 are lower than those when the gases and flammable materials are released from the cell vent 250R, the insulation piece 380 of the adjacent cell cover 300 and the cell vent 250 aligned with the insulation piece 380 may not be damaged.

Since the specific cell cover 300 with the ruptured insulation piece 380R and the cell cover 300 disposed adjacent to the specific cell cover 300 are separated from each other, even when the specific cell cover 300 becomes detached from the specific battery cell 101 or misaligned, the adjacent cell cover 300 can remain in a state of being placed on and aligned with the adjacent battery cell 101.

The skirt portion 315 of the cell cover 300 blocks the high-temperature gases and the flammable materials released from the cell vent 250R of the specific battery cell 101 from moving to the adjacent battery cell 101 in the second direction. Thus, the high-temperature gases and the flammable materials are not rapidly spread to the adj acent battery cells 101, and thermal propagation, fire, and explosions may be suppressed or delayed.

According to the present invention, when high-temperature gases and flammable materials are released from one or more battery cells included in a battery module 10, the insulation piece 380 of the cell cover 300 attached to the corresponding one or more battery cells 101 can rupture, allowing the high-temperature gases and flammable materials to escape outside of the one or more battery cells 101. Cell covers 300 attached to other, unaffected battery cells 101 may not be detached from the battery cells101, and insulation pieces 380 attached to the other battery cells 101 may not be damaged. Thus, the high-temperature gases and the flammable materials are not rapidly spread to the adjacent battery cells 101, and thermal propagation, fire, and explosions can be suppressed or delayed.

According to the present invention, the battery module 10 does not include a bus bar holder configured to support a cell bus bar 20, thereby reducing manufacturing costs of the battery module.

However, aspects and features of the present invention are not limited to those described above and other aspects and features not mentioned will be clearly understood by those skilled in the art from the detailed description given above.

The embodiments described in this specification and the configurations shown in the drawings are provided as some example embodiments of the present disclosure and do not represent all of the technical ideas, aspects, and features of the present disclosure. Accordingly, it is to be understood that there may be various modifications that may replace or modify aspects of the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

Although the present invention has been described with reference to some embodiments and drawings illustrating aspects thereof, the present invention is not limited thereto. Various modifications and variations can be made by a person skilled in the art to which the present invention belongs within the scope of the invention and the claims.

## Claims

1. A secondary battery assembly (100) comprising:
a battery cell (101) including a case (102), a terminal (130) protruding from the case (102), and a cell vent (250, 250R) installed in the case (102) to be rupturable; and
a cell cover (300) including a cover body (301), in which a cover through-hole (330) aligned with the cell vent (250, 250R) is formed and which is supported by the case (102), and an insulation piece (380, 380R) supported by the cover body (301), configured to close the cover through-hole (330).

2. The secondary battery assembly (100) as claimed in claim 1, wherein the cell cover (300) is fixed to the case (102).

3. A battery module (10) comprising:
a housing (11);
a plurality of secondary battery assemblies (100) of claim 1 or 2, wherein the battery cells (101) are disposed inside the housing (11), and wherein the plurality of cell covers (300) correspond one-to-one with the plurality of battery cells (101), wherein each of the plurality of cell covers (300) includes the cover body (301); and
a cell bus bar (20) that electrically connects the terminal (130) of one battery cell (101) among the plurality of battery cells (101) to the terminal (130) of another battery cell (101).

4. The battery module (10) as claimed in claim 3, wherein the cover body (301) includes a terminal exposure portion (313) that exposes the terminal (130).

5. The battery module (10) as claimed in claim 4, wherein the terminal (130) is provided as a pair in the battery cell (101), and
the pair of terminals (130) are disposed on a cell vent (250, 250R) surface in which the cell vent (250, 250R) is installed.

6. The battery module (10) as claimed in claim 5, wherein the cover body (301) includes:
a plate portion (310) that comes into contact with and is supported on an outer periphery of the cell vent (250, 250R) surface; and
a skirt portion (315) that is bent at an edge of the plate portion (310) and extends in a direction away from the cell bus bar (20).

7. The battery module (10) as claimed in claim 6, wherein the skirt portion (315) is provided as a pair spaced apart from each other.

8. The battery module (10) as claimed in claim 7, wherein a pair of adjacent battery cells (101) among the plurality of battery cells (101) are spaced apart by a gap (GP) that is greater than or equal to twice a thickness (TH) of the skirt portion (315).

9. The battery module (10) as claimed in any of claims 6 to 8, wherein the cover body (301) further includes an insulation piece support portion (320) in which the cover through-hole (330) is formed and to which the insulation piece (380, 380R) is attached.

10. The battery module (10) as claimed in claim 9, wherein one surface of the insulation piece support portion (320) facing the cell vent (250, 250R) surface is spaced apart from one surface of the plate portion (310) facing the cell vent (250, 250R) surface with a step difference.

11. The battery module (10) as claimed in any of claims 3 to 10, wherein the cell cover (300) is fixed to the battery cell (101) by the cell bus bar (20).

12. The battery module (10) as claimed in claim 11 when depending from any of claims 3 to 8, wherein the cover body (301) includes an insulation piece support portion (320) in which the cover through-hole (330) is formed and to which the insulation piece (380, 380R) is attached, and
when the cell cover (300) is fixed to the battery cell (101) by the cell bus bar (20), the insulation piece support portion (320) presses the insulation piece (380, 380R) in a direction that brings the insulation piece (380, 380R) into close contact with the case (102).

13. The battery module (10) as claimed in claim 11 or 12, wherein the cell bus bar (20) includes:
a first terminal coupling portion (21) coupled to the terminal (130) of the one battery cell (101);
a second terminal coupling portion (25) coupled to the terminal (130) of the another battery cell (101); and
a cell cover pressing portion (30) configured to connect the first terminal coupling portion (21) and the second terminal coupling portion (25) and press the cell cover (300) in a direction that brings the cell cover (300) into close contact with the case (102).

14. The battery module (10) as claimed in claim 13, wherein the cell bus bar (20) includes a metal plate, and
the cell cover pressing portion (30) is bent to protrude further toward the case (102) than the first terminal coupling portion (21) and the second terminal coupling portion (25).

15. The battery module (10) as claimed in any of claims 3 to 14, wherein the cover body (301) further includes a guide protrusion (340) configured to guide a mounting position of the cell bus bar (20), and
a guide through-hole (35) through which the guide protrusion (340) passes is formed in the cell bus bar (20).
